# EUROPÄISCHE PATENTANMELDUNG

(11) **EP 1 746 210 A2**
(43) Veröffentlichungstag der Anmeldung: **24.01.2007**
(21) Anmeldenummer: 06015059.6
(22) Anmeldetag: 19.07.2006
(51) Int. Cl.: E01F 11/00

(54) **Anordnung zur Detektion von Fahrzeugen auf Verkehrswegen**

(30) Priorität: 21.07.2005 DE 102005034756
(71) Anmelder: Manns, Klaus, Dr., 56424 Staudt (DE)
(72) Erfinder: Manns, Klaus, Dr., 56424 Staudt (DE)
(74) Vertreter: Brosch, Oliver

(57) **Zusammenfassung**

Die Erfindung bezieht sich auf eine Anordnung zur Detektion von Fahrzeugen auf Verkehrswegen, insbesondere von Fahrzeugen auf Strassen, bestehend aus mindestens einer aus mindestens einem Detektionsdraht (8) gebildeten Schleife, die in ein unterhalb der Verkehrsebene befindliches, umlaufendes und oben offenes Hohlprofil (4,2,3) aus Kunststoff eingelegt ist.

## Beschreibung

Die Erfindung bezieht sich auf eine Anordnung zur Detektion von Fahrzeugen auf Verkehrswegen, insbesondere von Fahrzeugen auf Strassen, bestehend aus mindestens einer aus mindestens einem Detektionsdraht gebildeten Schleife, die in ein unterhalb der Verkehrsebene befindliches, umlaufendes und oben offenes Hohlprofil aus Kunststoff eingelegt ist.

Eine solche Anordnung ist aus der europäischen Patentschrift 0 425 977 bekannt. Dabei weist das Hohlprofil einen U-förmigen Querschnitt auf und ist in einem vorgelagerten Arbeitsvorgang, beispielsweise aus einem offenen Schlauch, einstückig zu einem rechteckigen Rahmen geformt. Der Rahmen kann auch aus U-Profilstücken zusammengeschweißt sein. In den nach oben offenem Querschnitt eines solchen Rahmens wird dann die der Detektion dienende und meist aus mehreren metallischen Windungen bestehende Schleife eingelegt. Nach dem Einlegen der Windungen wird das Hohlprofil mit einem aushärtbaren Kunststoff geschlossen, der, in Verbindung mit dem Hohlprofil, die Windungen der Schleife vor einer Zerstörung durch hartes Material wie Steine, Rollsplitt oder dergleichen schützen soll. Um zu vermeiden, dass die Windungen der Schleife direkt auf dem Boden des Hohlprofils aufliegen, ist es möglich, vor dem Einlegen der Windungen in das Hohlprofil etwas Kunststoff einzugießen oder besondere Platzhalter, beispielsweise Lochscheiben, vorzusehen. Diese Anordnung hat den Nachteil, dass das zu einem Rahmen vorgefertigte Hohlprofil für jeden Einsatzfall immer genau hergestellt werden muss, was einen nicht geringen Aufwand erforderlich macht. Ferner besteht die Gefahr, dass der vorgefertigte Rahmen und damit die bereits darin befindlichen Windungen bei dem Transport zu der eigentlichen Einbaustelle beschädigt oder sogar unbrauchbar werden. Um diese Gefahr auszuschließen, können zusätzliche Versteifungsstreben an dem Rahmen angebracht werden. Auch dies ist mit einem besonderen, zusätzlichen Arbeitsaufwand verbunden.

Der Erfindung liegt nun die Aufgabe zugrunde, eine Anordnung zur Detektion von Fahrzeugen auf Verkehrswegen, insbesondere von Fahrzeugen auf Strassen, so auszugestalten, dass der Aufwand für die Herstellung des Hohlprofils zur Aufnahme der aus mindestens einer Windung bestehenden Schleife reduziert wird.

Insbesondere soll dadurch der Aufwand für unterschiedlich große und unterschiedlich geformte Rahmen für die Schleife verringert werden.

Zur Lösung dieser Aufgabe wird gemäß der Erfindung bei einer Anordnung der eingangs beschriebenen Gattung vorgeschlagen, dass das Hohlprofil aus Eckprofilstücken, mindestens einem T-Profilstück und daran angeschlossenen, geraden Pmfilstücken gebildet ist und dass die Eckprofilstücke, das T-Profilstück und die geraden Profilstücke durch im Querschnitt U-förmige Abdeckprofilstücke formschlüssig geschlossen sind.

Durch eine solche Ausgestaltung kann der Rahmen für die Aufnahme der aus mindestens einer metallischen Windung bestehenden Schleife in einfacher Weise und vor allem in kürzester Zeit an der Einbaustelle in der erforderlichen Größe und Form zusammengebaut werden. In die entsprechend der Form des Rahmens benötigten Eckprofilstücke und in das T-Profilstück sind dann nur die geraden Profilstücke einzusetzen, die problemlos auf die erforderliche Länge von einem Stab abgeschnitten werden können.

Weitere Merkmale einer Anordnung gemäß der Erfindung sind in den Ansprüchen 2 bis 8 offenbart.

Die Erfindung sowie Vorteile derselben werden nachfolgend anhand in einer Zeichnung dargestellter Ausführungsbeispiele näher erläutert. Dabei zeigen
- **Figur 1**: eine Draufsicht auf einen Rahmen einer Anordnung gemäß der Erfindung,
- **Figur 2**: eine Draufsicht auf ein Eckprofil,
- **Figur 3**: eine andere Ausbildung eines Eckprofils und
- **Figur 4**: eine Schnittdarstellung durch einen geschlossenen Rahmen.

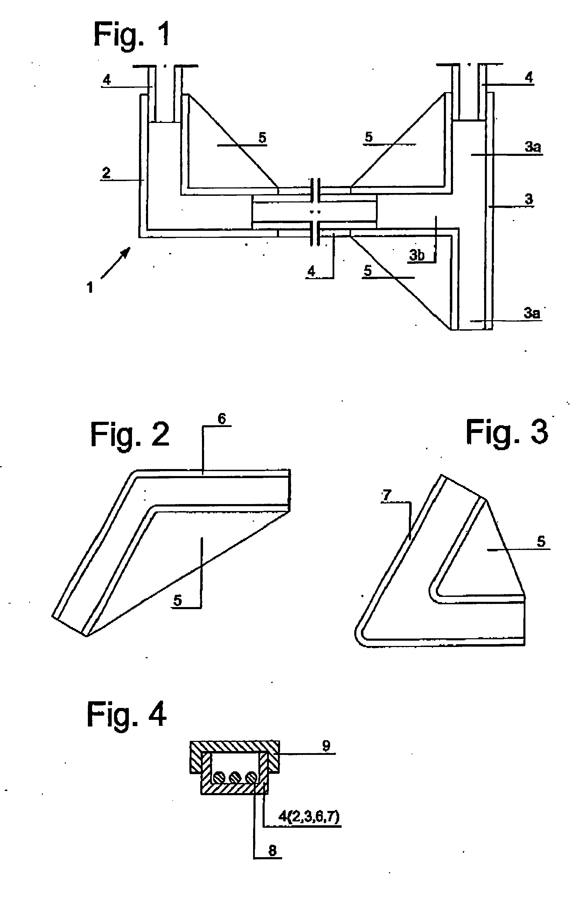

In der **Figur 1** der Zeichnung ist von einer Anordnung zur Detektion von Fahrzeugen auf Verkehrswegen, insbesondere von Fahrzeugen auf Strassen, nur ausschnittsweise in Draufsicht ein Rahmen 1 gezeigt, der aus drei Eckprofilstücken 2, einem T-Profilstück 3 und vier geraden Profilstücken 4 gebildet ist. In der Zeichnung sind jedoch nur ein Eckprofilstück 2 und drei gerade Profilstücke 4 zu erkennen. Alle Profilstücke 2 bis 4 sind aus Kunststoff, vorteilhaft aus faserverstärktem Kunststoff gefertigt und weisen einen U-förmigen Querschnitt auf, wobei sich bei einem verlegten Rahmen 1 der offene Bereich des Rahmens 1 immer oben befindet. Dabei ist der U-förmige Querschnitt der Eckprofilstücke 2 und des T-Profilstückes 3 um ein vorbestimmtes Maß größer als der Querschnitt der geraden Profilstücke 4 ausgebildet. Dieses Maß ist vorteilhaft so gewählt, dass die geraden Profilstücke 4 formschlüssig und damit weitgehend spielfrei in die Eckprofilstücke 2 und das T-Profilstück 3 eingelegt bzw. eingesteckt werden können, wie dies sehr deutlich in der Figur 1 zu erkennen ist. Die Einstecklänge sollte dabei einige Millimeter betragen, damit der an der Einbaustelle verlegte Rahmen 1 eine gewisse Stabilität aufweist.

Das gezeichnete Eckprofilstück 2 der Figur 1 weist eine rechteckige Form auf. Auch bei dem T-Profilstück 3 verlaufen die beiden Schenkel 3a rechtwinklig zu dem Steg 3b. Die Eckprofilstücke 2 und das T-Profilstück 3 werden in vorteilhafter Weise durch einen Gieß- oder Spritzvorgang hergestellt. Bedarfweise können die Eckprofilstücke 2 und das T-Profilstück 3 jeweils mit einer Verstärkung 5 versehen sein, die beispielsweise plattenartig ausgebildet ist. Diese Verstärkung 5 kann bereits bei der Herstellung der Eckprofilstücke 2 und des T-Profilstücks 3 mit angegossen oder angespritzt werden. Es ist allerdings auch möglich, die Eckprofilstücke 2 und das T-Profilstück 3 manuell vorzufertigen, indem entsprechend zugeschnittene Profilstücke auf einer Platte befestigt werden.

Während, wie oben ausgeführt, jedes Eckprofilstück 2 gemäß der Figur 1 eine rechteckige Form besitzt, ist in der Figur 2 der Zeichnung ein Eckprofilstück 6 gezeichnet, welches einen gestreckten Winkel aufweist. Das Eckprofilstück 7 der Figur 3 besitzt dagegen einen spitzen Winkel. Die Eckstücke 6 und 7 werden dann verwendet, wenn der zusammenzusetzende Rahmen 1 die Form eines schiefwinkligen Parallelogramms bzw. einer Raute aufweisen soll.

Dort, wo Fahrzeuge auf Verkehrswegen, insbesondere Fahrzeuge auf Strassen, durch eine Detektion überwacht bzw. deren Vorhandensein festgestellt werden soll, wird bei einer neuen Strasse bzw. neuen Strassendecke unter der Tragschicht und bei einer bereits vorhandenen Strasse in einer entsprechenden Ausfräsung ein Rahmen 1 aus Eckprofilstücken 2, T-Profilstücken 3 und geraden Profilstücken 4 ausgelegt, wobei die offene Seite aller Profilstücke 2 bis 4 nach oben gerichtet ist.
Die geraden Profilstücke 4 werden an der Einbaustelle auf die erforderliche Länge zugeschnitten. In die offenen Profilstücke 2 bis 4 wird dann eine bereits vorbereitete und aus mehreren Windungen 8 bestehende, bereits fertig konfektionierte Detektionsschleife eingelegt, wie dies die Figur 4 sehr deutlich erkennen lässt. Im Anschluss daran werden die Profilstücke 2 bis 4 durch aufsteckbare Abdeckprofilstücke 9 geschlossen, die ebenfalls einen U-förmigen, den Profilstücken 2 bis 4 angepassten Querschnitt aufweisen und aus Kunststoff bzw. faserverstärktem Kunststoff bestehen. Dadurch sind alle Windungen 8 der Detektionsschleife gegen äußere Einwirkungen geschützt.

Über das T-Profilstück 3 sind die Anschlussleitungen der Detektionsschleife nach außen geführt und an eine Schaltanlage angeschlossen. Dieses T-Profilstück 3 kann, im Gegensatz zu der Figur 1, auch innerhalb eines geraden, allerdings geteilten Profilstückes 2 angeordnet sein. Die geraden Profilstücke 2 sind dann in die Schenkel 3a des T-Profilstückes 3 eingesteckt, während die Anschlussleitungen über den Steg 3b des T-Profilstückes 3 nach außen verlegt sind.

## Patentansprüche

1. Anordnung zur Detektion von Fahrzeugen auf Verkehrswegen, insbesondere von Fahrzeugen auf Strassen, bestehend aus mindestens einer aus mindestens einem Detektionsdraht gebildeten Schleife, die in ein unterhalb der Verkehrsebene befindliches, umlaufendes und oben offenes Hohlprofil aus Kunststoff eingelegt ist, **dadurch gekennzeichnet, dass** das Hohlprofil aus Eckprofilstücken (2) und mindestens einem T-Proflstück (3) und daran angeschlossenen, geraden Pmfilstücken (4) gebildet ist und dass die Eckprofilstücke (2), das T-Profilstück (3) und die geraden Profilstücke (4) durch im Querschnitt U-förmige Abdeckprofilstücke (9) formschlüssig geschlossen sind.

2. Anordnung nach Anspruch 1, **dadurch gekennzeichnet, dass** die geraden Profilstücke (4) mit ihren Enden formschlüssig in die Eckprofilstücke (2) und das T-Profilstück (3) eingelegt sind.

3. Anordnung nach Anspruch-1 oder 2, **dadurch gekennzeichnet, dass** die EckprofilstücKe (2) und das T-Profilstück (3) einen rechteckigen Winkel aufweisen.

4. Anordnung nach Anspruch 1 oder 2, **dadurch gekennzeichnet, dass** die Eckproflstücke (2) und das T-Profilstück (3) einen spitzen Winkel aufweisen.

5. Anordnung nach Anspruch 1 oder 2, **dadurch gekennzeichnet, dass** die Eckprofilstücke (2) und das T-Profilstück (3) einen gestreckten Winkel aufweisen.

6. Anordnung nach mindestens einem der Ansprüche 1 bis 5, **dadurch gekennzeichnet, dass** die Eckprofilstücke (2) und das T-Profilstück (3) mit einer Verstärkung (5) versehen sind.

7. Anordnung nach Anspruch 6, **dadurch gekennzeichnet, dass** die Verstärkung (5) aus einer Platte gebildet ist.

8. Anordnung nach mindestens einem der Ansprüche 1 bis 8, **dadurch gekennzeichnet, dass** die Eckprofilstücke (2), das T-Profilstück (3), die geraden Profilstücke (4) und die Abdeckprofilstücke (9) aus faserverstärktem Kunststoff gebildet sind.
